# EUROPÄISCHE PATENTSCHRIFT

(11) **EP 1 878 532 B1**
(45) Veröffentlichungstag und Bekanntmachung des Hinweises auf die Patenterteilung: **10.09.2008**
(21) Anmeldenummer: 06014428.4
(22) Anmeldetag: 12.07.2006
(51) Int. Cl.: B23K 37/04, B23K 37/053, B23K 26/08, B23K 26/28

(54) **Vorrichtung zum Verbinden von mindestens zwei Bauteilen, Verwendung der Vorrichtung und Aufnahmeelement**
Device for joining at least two components, use of the device and holding element
Dispositif pour relier au moins deux composants, l'utilisation du dispositif et élément de support

(43) Veröffentlichungstag der Anmeldung: 16.01.2008
(73) Patentinhaber: Federal-Mogul Wiesbaden GmbH, 65201 Wiesbaden (DE)
(72) Erfinder: Kirchhof, Klaus, 65527 Niedernhausen (DE); Stiep, Hans-Willi, 55546 Biebelsheim (DE)
(74) Vertreter: Fuchs

(56) Entgegenhaltungen:
- EP-A1- 1 136 713
- WO-A-00/78561
- GB-A- 1 512 782
- US-A- 5 676 469

## Beschreibung

Die Erfindung betrifft eine Vorrichtung zum Verbinden von mindestens zwei Bauteilen.

Derartige Vorrichtungen werden beispielsweise zum Verschweißen von Buchsen mit Anlaufscheiben eingesetzt. Hierzu sind entsprechende Halterungen für die Buchsenteile und die Anlaufscheiben erforderlich. Die Handhabung solcher Vorrichtungen ist aufwendig, weil die Bedienungsperson zum Bestücken und Einrichten der Vorrichtung mit manuellen Werkzeugen arbeiten muss.

Es ist daher Aufgabe der Erfindung, eine Vorrichtung bereitzustellen, die ohne die Benutzung von manuellen Werkzeugen bestückt werden kann.

Diese Aufgabe wird mit einer Vorrichtung gelöst, die durch folgende Merkmale gekennzeichnet ist:
- eine Einpress-Station mit mindestens einem ersten, erste Rastmittel aufweisenden Aufnahmeelement und mit einer ersten Drückeinrichtung zum Einpressen des ersten Bauteils in das erste Aufnahmeelement,
- eine Fügestation mit mindestens einem zweiten, zweite Rastmittel aufweisenden Aufnahmeelement zur Aufnahme des zweiten Bauteils und mit einer zweiten Drückeinrichtung zum Zusammendrücken und Verrasten der beiden Aufnahmeelemente und
- eine Schweißstation zum Verschweißen der beiden in den beiden Aufnahmeelementen befindlichen Bauteile.

Der Vorteil der Vorrichtung besteht darin, dass in ein erstes Aufnahmeelement das betreffende Bauteil mittels einer Drückeinrichtung eingepresst wird. Hierzu ist das erste Bauteil lediglich auf dem ersten Aufnahmeelement zu positionieren. Das zweite Bauteil wird von einem zweiten Aufnahmeelement aufgenommen, wobei dieses zweite Bauteil vorzugsweise eingelegt wird.

Um die Bauteile in ihre Position zu bringen, in der sie miteinander verschweißt werden sollen, werden die Aufnahmeelemente miteinander verbunden. Hierzu werden die Aufnahmeelemente in der Fügestation gegeneinander verschoben und somit zusammengedrückt, wobei die Rastmittel der beiden Aufnahmeelemente ineinander greifen.

Vorzugsweise weist die Vorrichtung zwei Aufnahmeelemente auf, die auf diese Weise miteinander verbunden werden. Es ist auch möglich, bei mehreren Bauteilen auch mehrere Aufnahmeelemente vorzusehen, die jeweils mittels Rastelementen miteinander verbunden werden können.

In einem Aufnahmeelement kann auch mehr als ein Bauteil aufgenommen werden. Wenn beispielsweise das erste Bauteil eine Gleitlagerbuchse ist, kann das zweite Bauteil ein Anlaufring oder die zweiten Bauteile können aus zwei oder mehr Anlaufscheiben bestehen, die zusammen einen Anlaufring ergeben.

Das Bedienungspersonal braucht keine manuellen Werkzeuge, um die Bauteile in die Aufnahmeelemente einzubringen und diese Aufnahmeelemente zu verbinden.

Das Auswerfen des aus den Bauteilen verschweißten Bauelementes erfolgt vorzugsweise ebenfalls in der Einpress-Station.

Vorzugsweise werden die Rastmittel aus Vertiefungen an einem Aufnahmeelement und aus in die Vertiefungen eingreifenden federnden Druckstücken am anderen Aufnahmeelement gebildet.

Das erste Aufnahmeelement kann eine ringsförmige Radiallageraufnahme, das zweite Aufnahmeelement eine ringförmige Axiallageraufnahme sein. Die Radiallageraufnahme dient zu Aufnahme einer Gleitlagerbuchse und die Axiallageraufnahme zur Aufnahme eines Anlaufrings oder von Anlaufscheiben.

Das erste Aufnahmeelement weist vorzugsweise einen durchmessergroßen ersten Aufnahmeabschnitt und einen angrenzenden durchmesserkleinen zweiten Aufnahmeabschnitt auf. Das Einpressen von beispielsweise gerollten Buchsen in das Aufnahmeelement wird durch die beiden Aufnahmeabschnitte erleichtert. Der durchmesserkleinere Aufnahmeabschnitt definiert hierbei das Endmaß der Gleitlagerbuchse.

Vorzugsweise ist die Breite B1 des zweiten Aufnahmeabschnitts kleiner als die Breite B2 des ersten Bauteils. Dadurch steht das erste Bauteil gegenüber dem ersten Aufnahmeelement vor. Beim Zusammenfügen mit dem zweiten Aufnahmeelement wird das erste Bauteil durch das zweite Bauteil zurückgeschoben, wodurch sichergestellt wird, dass beide Bauteile in der vorgesehenen Weise aneinander liegen, bevor der Schweißvorgang durchgeführt wird.

Dies erfordert entsprechende Reib- oder Klemmkräfte, damit das erste Bauteil in seiner Position sicher gehalten werden kann und andererseits auch eine Verschiebung innerhalb des ersten Aufnahmeelementes gewährleistet werden kann. Um dies zu realisieren, sind vorzugsweise zwei Ausführungen vorgesehen.

Gemäß einer ersten Ausführungsform sind die Aufnahmeabschnitte in radialer Richtung federnd ausgebildet.

Hierbei kann das erste Aufnahmeelement einen Spannring aufweisen, der eine Vielzahl von ineinander greifenden, nebeneinander angeordneten Federelementen aufweist.

Gemäß einer zweiten Ausführungsform kann auch mindestens ein Aufnahmeabschnitt mindestens einen O-Ring aufweisen.

Die Rastmittel können vorzugsweise federnde Druckstücke und entsprechende Vertiefungen in Form einer oder mehrerer Nuten sein.

Hierzu besitzt das erste Aufnahmeelement vorzugsweise eine das zweite Aufnahmeelement übergreifende Schürze, in der die federnden Druckstücke nach innen weisend angeordnet sind. Vorzugsweise besitzt das zweite Aufnahmeelement am Außenumfang eine umlaufende Nut, in die die federnden Druckstücke eingreifen.

Vorzugsweise greifen die federnden Druckstücke außermittig in die Nut ein. Dieses außermittige Eingreifen bewirkt ein Andrücken der beiden Aufnahmeelemente und das zuvor beschriebene Zurückschieben des ersten Bauteils innerhalb des ersten Aufnahmeelementes.

Die Schweißstation weist vorzugsweise einen Laser auf.

Ferner weist die Schweißstation vorzugsweise einen Tisch mit einer Mulde auf, in den die miteinander verbundenen Aufnahmeelemente einlegbar sind. Auch für diesen Verfahrensschritt sind keine manuellen Werkzeuge seitens des Bedienungspersonals erforderlich.

Die Achse des Tisches ist vorzugsweise unter einem Winkel *α* zwischen 70° und 95° zum Laserstrahl angeordnet. Hierbei ist der Laser vorzugsweise über dem Tisch angeordnet. Es ist von Vorteil, wenn der Tisch ein Drehtisch ist, der unter dem ortsfest angeordneten Laser gedreht werden kann. Diese Ausführungsform ist platzsparender als die ebenfalls mögliche Ausführungsform, wonach der Laser um den Tisch herumgeführt wird.

Vorzugsweise wird die Vorrichtung zum Verschweißen von Gleitlagerbuchsen mit Anlaufscheiben oder Anlaufringen verwendet.

Das zuvor beschriebene erste Aufnahmeelement weist einen Grundkörper zur klemmenden Aufnahme eines Bauteils auf und ist gekennzeichnet durch mindestens einen Aufnahmeabschnitt, der senkrecht zur Oberfläche des aufzunehmenden Bauteils federnd ausgebildet ist, wobei eine Vielzahl von ineinander greifenden, nebeneinander angeordneten Federelementen vorgesehen sind.

Jedes Federelement weist vorzugsweise zwei Schenkel auf, wovon das freie Ende des ersten Schenkels am aufgenommenen Bauteil und das Ende des zweiten Schenkels am Grundkörper befestigt ist. Die Federelemente sind in Draufsicht U-förmig ausgebildet, so dass sie in radialer Richtung federnd sind.

Beispielhafte Ausführungsformen der Erfindung werden nachfolgend anhand der Zeichnungen näher erläutert. Es zeigen:
- Figur 1a: in schematischer Darstellung die Einpress- und die Fügestation,
- Figur 1b: eine vergrößerte Darstellung der Einzelheit Ib in Figur 1a,
- Figur 2: in schematischer Darstellung die Schweißstation,
- Figuren 3+4: jeweils einen Schnitt durch das erste Aufnahmeelement gemäß zweier Ausführungsformen,
- Figur 5: die Draufsicht auf das Aufnahmeelement gemäß Pfeil V in Figur 4,
- Figur 6: eine vergrößerte Darstellung der Einzelheit VI aus Figur 5, und
- Figur 7: eine perspektivische Darstellung des Aufnahmeelements gemäß Figur 4.

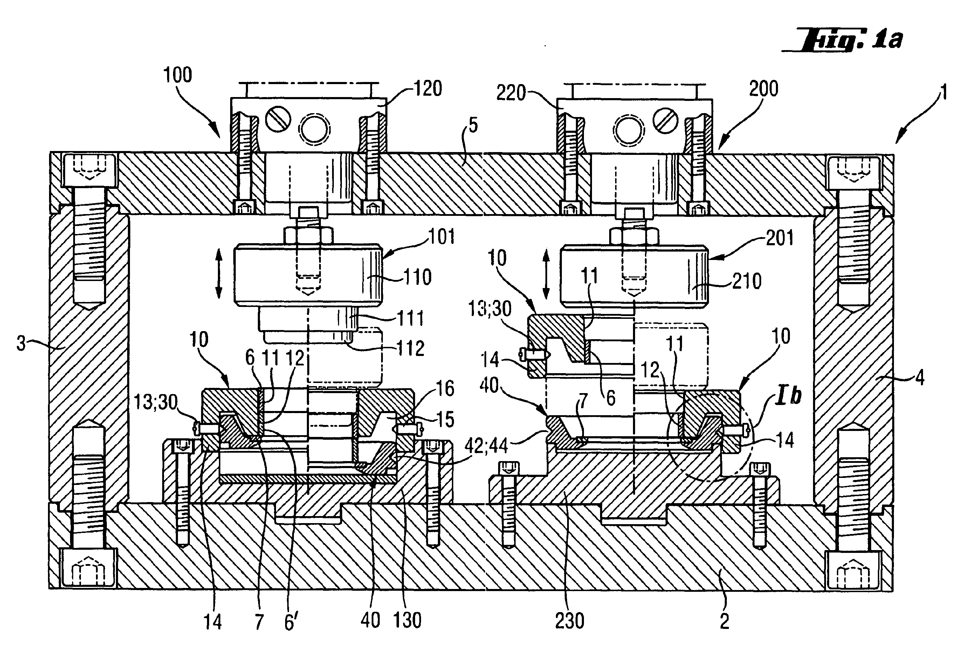

in der Figur 1a sind nebeneinander die Einpress-Stationen 100 und die Fügestation 200 dargestellt. Dieser Teil der Vorrichtung weist einen Rahmen 1 mit einer Grundplatte 2, Stützen 3, 4 und einer Traverse 5 auf. Auf der Grundplatte 2 ist im Bereich der Einpress-Station 100 ein Tisch 130 angeordnet, über dem sich eine erste Drückeinrichtung 101 befindet, die an der Traverse 5 angeordnet ist. Diese erste Drückeinrichtung 101 weist eine Antriebseinrichtung 120 auf, um den Eindrückbolzen 110 in Pfeilrichtung auf- und abbewegen zu können. Der Eindrückbolzen 110 besitzt am unteren Ende einen durchmessergrößeren Stempelabschnitt 111 und einen durchmesserkleineren Stempelabschnitt 112, die beide auf den Durchmesser des entsprechenden Bauteils 6 abgestimmt sind, das sich in einem ersten Aufnahmeelement 10 befindet.

Im Bereich der Fügestation 200 befindet sich auf der Grundplatte 2 ebenfalls ein Tisch 230. Über dem Tisch 230 befindet sich eine zweite Drückeinrichtung 201 mit einer Antriebseinrichtung 220, um den Drückbolzen 210 in vertikaler Richtung auf- und abbewegen zu können.

In der Einpress-Station 100 ist ein erstes Aufnahmeelement 10 und ein zweites Aufnahmeelement 40 im Schnitt dargestellt. Im linken Teil der Darstellung sind die beiden Aufnahmeelemente 10 und 40 miteinander verbunden, im rechten Teil sind die beiden Aufnahmeelemente 10 und 40 voneinander getrennt.

Die Aufnahmeelemente 10 und 40 dienen zur Aufnahme einer Gleitlagerbuchse 6 und eines Anlaufrings 7. Im linken Teil der Darstellung der Einpress-Station 100 ist im unteren Teil ein aus Gleitlagerbuchse 6 und Anlaufring 7 verschweißtes Bauelement 6' dargestellt, auf das von oben eine Gleitlagerbuchse 6 mittels der ersten Drückeinrichtung 101 eingeführt worden ist. Beim weiteren Eindrücken der Gleitlagerbuchse 6 wird diese innerhalb des ersten Aufnahmeelementes 10 nach unten verschoben, wobei gleichzeitig das fertige Bauelement 6' zusammen mit dem zweiten Aufnahmeelement 40 nach unten ausgestoßen wird. Hierbei wird das zweite Aufnahmeelement 40 vom ersten Aufnahmeelement 10 getrennt. Wie nachfolgend noch im Einzelnen beschrieben wird, besitzen die Aufnahmeelemente 10 und 40 Rastmittel 13 und 44 in Form von federnden Druckstücken 30 und einer außen liegenden Nut 42.

In einem nicht dargestellten Verfahrensschritt wird das fertige Bauelement 6' aus dem zweiten Aufnahmeelement 40 entfernt bzw. herausgedrückt.

In der Fügestation 200 befindet sich auf dem Tisch 230 ein zweites Aufnahmeelement 40, in das ein Anlaufring 7 von oben eingelegt ist.

Das erste Aufnahmeelement 10 mit der Gleitlagerbuchse 6 aus der Einpress-Station 100 wird auf das zweite Aufnahmeelement 40 aufgelegt und mittels der zweiten Drückeinrichtung 201 durch Herunterfahren des Drückbolzens 210 gegen das zweite Aufnahmeelement 40 gedrückt. Hierbei rasten die Rastmittel 13 und 44 ineinander. Gleichzeitig wird hierbei die Buchse 6, die gegenüber dem unteren Rand des ersten Aufnahmeelemente 10 geringfügig vorsteht (siehe linker Teil der Darstellung der Fügestation 200), innerhalb des ersten Aufnahmeelementes 10 zurückgeschoben. Dadurch wird sichergestellt, dass die Buchse 6 mit ihrer Stirnfläche auf dem Anlaufring 7 aufliegt.

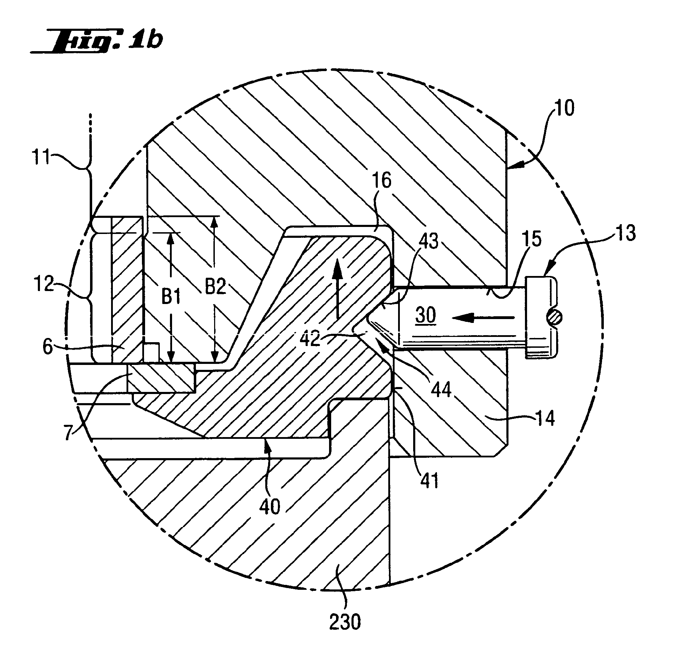

Die in Figur 1a eingezeichnete Einzelheit X ist in der Figur 1b vergrößert dargestellt. Das erste Aufnahmeelement 10 besitzt eine Schürze 14, die über den Umfang verteilt eine Anzahl von Bohrungen 15 aufweist, in denen als erstes Rastmittel 13 federnde Druckstücke 30 angeordnet sind, die nach innen vorstehen. Das zweite Aufnahmeelement 40 besitzt am Außenumfang 41 eine im Wesentlichen V-förmige Nut 42 als zweites Rastmittel 44. Wenn das erste Aufnahmeelement 10 auf dem zweiten Aufnahmeelement 40 aufliegt, wie dies in der Figur 1b dargestellt ist, greift das federnde Druckstück 30 außermittig an der oberen Nutflanke 43 der Nut 42 an. Dadurch wird eine vertikale Kraft erzeugt, so dass das erste Aufnahmeelement 10 gegen das zweite Aufnahmeelement 40 gedrückt wird.

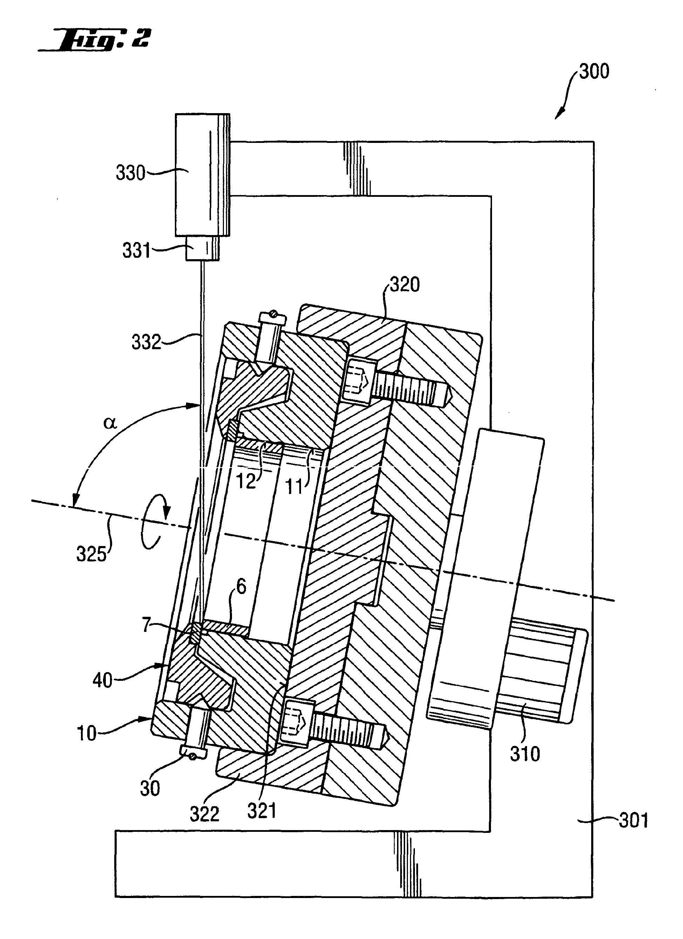

In der Figur 2 ist die Schweißstation 300 dargestellt, die ein Gestell 301 umfasst, an dem ein Motor 310 und ein Drehtisch 320 angeordnet ist. Der Drehtisch 320 besitzt eine Mulde 321, in die die beiden miteinander verbundenen und verrasteten Aufnahmeelemente 10, 40 eingelegt sind. Der Drehtisch 320 ist geneigt angeordnet, so dass der Verbund aus den beiden Aufnahmeelementen 10 und 40 nicht herausfallen kann. Der Verbund aus den Aufnahmeelementen 10 und 40 liegt am Muldenrand 322 an.

Im oberen Bereich ist ein Laser 330 mit einer Optik 331 an dem Gestell 301 befestigt, der senkrecht nach unten einen Laserstrahl 332 aussendet. Die Achse 325 des Drehtischs 320 ist unter einem Winkel α von vorzugsweise 80° zum Laserstrahl 332 angeordnet. Der Laserstrahl 332 trifft auf die Kontaktstelle von Gleitlagerbuchse 6 und Anlaufscheibe 7, so dass in diesem Bereich ein Verschweißen durchgeführt werden kann. Durch Drehen des Drehtischs 320 mittels des Motors 310 wird der gesamte Innenumfang vom Laserstrahl 332 abgefahren.

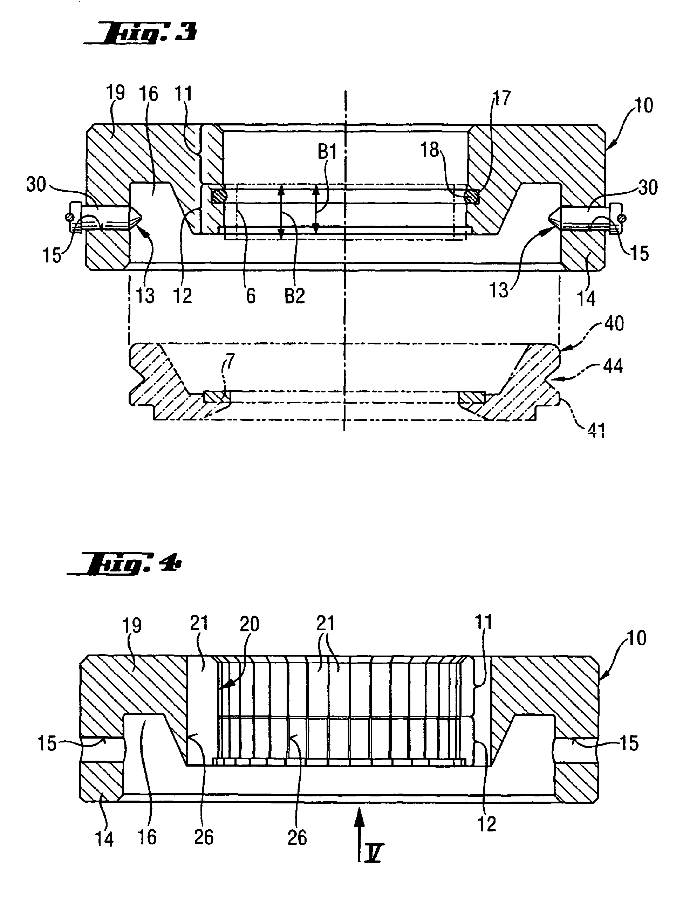

In der Figur 3 ist ein Schnitt durch ein erstes Aufnahmeelement 10 dargestellt. Im Grundkörper 19 sind zwei Aufnahmeabschnitte 11 und 12 vorgesehen, deren Durchmesser sich geringfügig voneinander unterscheiden. Der Durchmesser des ersten Aufnahmeabschnitts 11 ist vorzugsweise um 0,4 mm bis 0,6 mm, vorzugsweise 0,5 mm größer als der Durchmesser des zweiten Aufnahmeabschnittes 12, der unterhalb des ersten Aufnahmeabschnitts 10 angeordnet ist. In diesem zweiten Aufnahmeabschnitt 12 ist ein O-Ring 18 in einer entsprechenden Ringnut 17 angeordnet. Dadurch wird gewährleistet, dass die nicht dargestellte Gleitlagerbuchse 6 klemmend im zweiten Aufnahmeabschnitt 12 gehalten wird, wobei auch gleichzeitig eine Verschiebbarkeit innerhalb des ersten Aufnahmeelementes 10 gewährleistet wird. Am Grundkörper ist eine ringförmige Schürze 14 mit Bohrungen 15 angeformt, in die die federnden Druckstücke (nicht dargestellt) eingesetzt werden. Durch die Schürze 14 wird ein Ringraum 16 gebildet, in den das zweite Aufnahmeelement 40 eingreift.

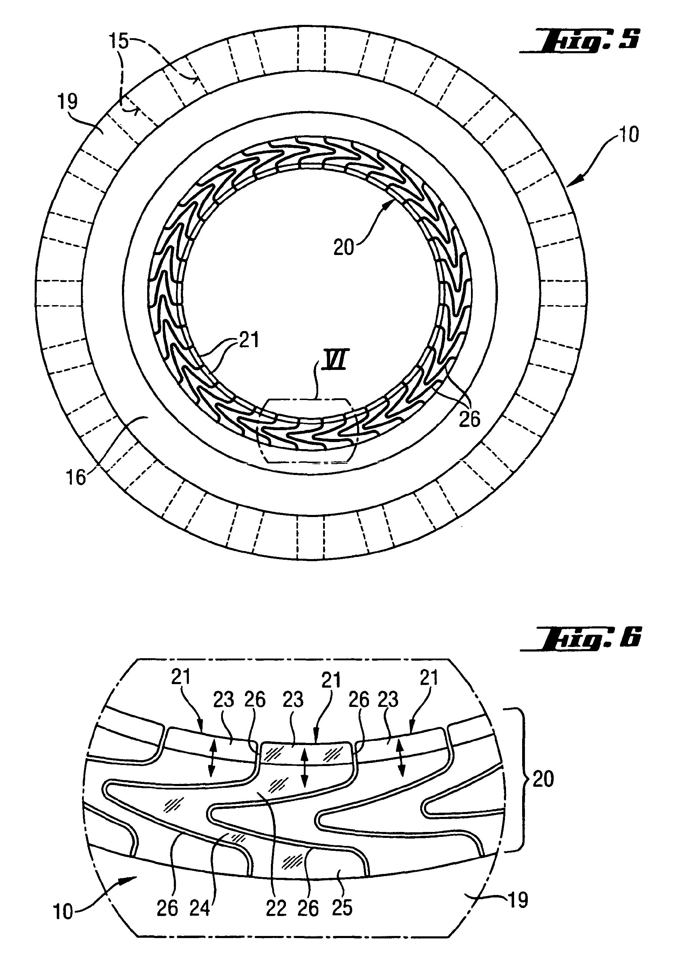

In der Figur 4 ist eine weitere Ausführungsform im Schnitt dargestellt, bei der die beiden Aufnahmeabschnitte 11 und 12 durch einen Spannring 20 gebildet werden, der aus einer Vielzahl von nebeneinander angeordneten Federelementen 21 besteht, wie dies in Draufsicht der Figur 5 zu sehen ist.

Die Figur 5 zeigt eine Ansicht durch das Aufnahmeelement 10 gemäß Figur 4 nach dem Pfeil V. In der Schürze 14 sind die Bohrungen 15 für die federnden Druckstücke 30 (nicht dargestellt) zu sehen. Der Spannring 20 besteht in der hier gezeigten Ausführungsform aus einer Vielzahl nebeneinander angeordneter Federelemente 21, die in Umfangsrichtung aneinandergereiht sind und jeweils U-förmig ausgeführt sind.

Wie in der Figur 6 vergrößert dargestellt ist (Einzelheit VI aus Figur 5), besitzt jedes Federelement 21 einen ersten Schenkel 22 und einen zweiten Schenkel 24, die in Draufsicht zusammen ein U-förmiges Federelement 21 bilden. Die Federelemente 21 sind jeweils durch einen Schlitz 26 voneinander getrennt. Das freie Ende 23 des ersten Schenkels liegt an der nicht dargestellten Gleitlagerbuchse an, während das Ende 25 am Grundkörper 19 des ersten Aufnahmeelementes 10 befestigt ist. Die U-förmige Ausgestaltung ermöglicht eine Federung in radialer Richtung, wie dies durch die in Figur 6 eingezeichneten Pfeile angedeutet wird. Die Breite des Spannrings 20 und die Stärke der Schenkel 22, 24 richtet sich nach der gewünschten Federkraft.

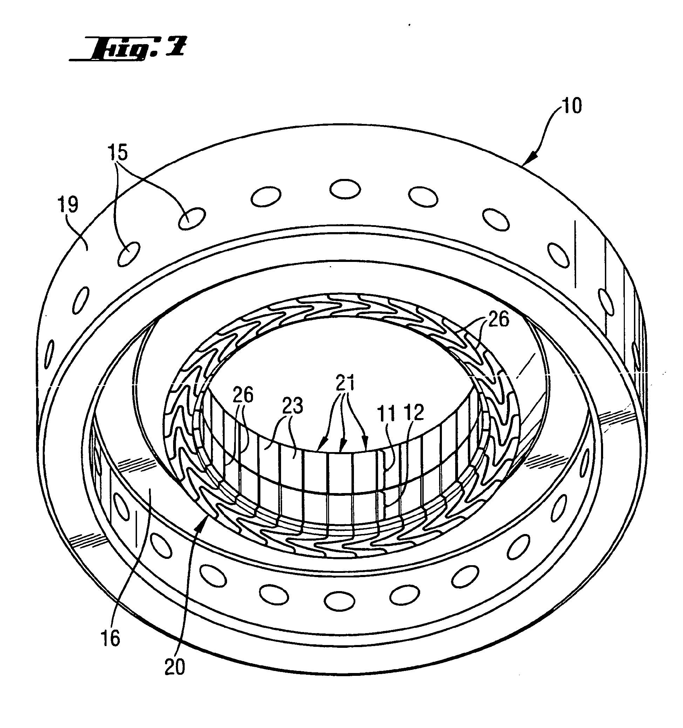

In der Figur 7 ist ein Spannring 20 in perspektivischer Darstellung zu sehen. Zwischen den Federelementen 21 befinden sich die Schlitze 26, um die erforderliche Beweglichkeit der Federelemente zu gewährleisten.

### Bezugszeichenliste

- 1: Rahmen
- 2: Grundplatte
- 3: Stütze
- 4: Stütze
- 5: Traverse
- 6: Gleitlagerbuchse, Bauteil
- 6': Bauelement
- 7: Anlaufring

- 10: erstes Aufnahmeelement
- 11: erster Aufnahmeabschnitt
- 12: zweiter Aufnahmeabschnitt
- 13: erstes Rastmittel
- 14: Schürze
- 15: Bohrung
- 16: Ringraum
- 17: Ringnut
- 18: O-Ring
- 19: Grundkörper

- 20: Spannring
- 21: Federelement
- 22: erster Schenkel
- 23: freies Ende des ersten Schenkels
- 24: zweiter Schenkel
- 25: Ende des zweiten Schenkels
- 26: Schlitz

- 30: federndes Druckstück

- 40: zweites Aufnahmeelement
- 41: Außenumfang
- 42: Nut
- 43: obere Nutflanke
- 44: zweites Rastmittel

- 100: Einpress-Station
- 101: erste Drückeinrichtung
- 110: Eindrückbolzen
- 111: Stempelabschnitt
- 112: Stempelabschnitt
- 120: Antriebseinrichtung
- 130: Tisch

- 200: Fügestation
- 201: zweite Drückeinrichtung
- 210: Druckbolzen
- 220: Antriebseinrichtung
- 230: Tisch

- 300: Schweißstation
- 301: Gestell
- 310: Motor
- 320: Drehtisch
- 321: Mulde
- 322: Muldenrand
- 325: Achse
- 330: Laser
- 331: Optik
- 332: Laserstrahl

- α: Winkel

- B₁: Breite von 12
- B₂: Breite von 6

## Patentansprüche

1. Vorrichtung zum Verbinden von mindestens zwei Bauteilen, **gekennzeichnet durch**
- eine Einpress-Station (100) mit mindestens einem ersten, erste Rastmittel (13) aufweisenden Aufnahmeelement (10) und mit einer ersten Drückeinrichtung (101) zum Einpressen des ersten Bauteils (6) in das erste Aufnahmeelement (10),
- eine Fügestation (200) mit einem zweiten, zweite Rastmittel (44) aufweisenden Aufnahmeelement (40) zur Aufnahme des zweiten Bauteils (7) und mit einer zweiten Drückeinrichtung (201) zum Zusammendrücken und Verrasten der beiden Aufnahmeelemente (10, 40) und
- eine Schweißstation (300) zum Verschweißen der beiden in den beiden Aufnahmeelementen (10, 40) befindlichen Bauteile (6, 7).

2. Vorrichtung nach Anspruch 1, **dadurch gekennzeichnet, dass** die Rastmittel (13, 44) Vertiefungen an einem Aufnahmeelement (10 oder 40) und in die Vertiefungen eingreifende federnde Druckstücke (30) am anderen Aufnahmeelement (10 oder 40) umfassen.

3. Vorrichtung nach Anspruch 1 oder 2, **dadurch gekennzeichnet, dass** das erste Aufnahmeelement (10) eine ringförmige Radiallageraufnahme und das zweite Aufnahmeelement (40) eine ringförmige Axiallageraufnahme ist.

4. Vorrichtung nach einem der Ansprüche 1 bis 3, **dadurch gekennzeichnet, dass** das erste Aufnahmeelement (10) einen durchmessergroßen ersten Aufnahmeabschnitt (11) und einen angrenzenden durchmesserkleinen zweiten Aufnahmeabschnitt (12) aufweist.

5. Vorrichtung nach einem der Ansprüche 1 bis 4, **dadurch gekennzeichnet, dass** die Breite B1 des zweiten Aufnahmeabschnittes (12) kleiner als die Breite B2 des ersten Bauteils (6) ist.

6. Vorrichtung nach einem der Ansprüche 1 bis 5, **dadurch gekennzeichnet, dass** die Aufnahmeabschnitte (11, 12) in radialer Richtung federnd ausgebildet sind.

7. Vorrichtung nach einem der Ansprüche 1 bis 6, **dadurch gekennzeichnet, dass** das erste Aufnahmeelement (10) einen Spannring (20) aufweist, der eine Vielzahl von ineinander greifenden, nebeneinander angeordneten Federelementen (21) aufweist.

8. Vorrichtung nach einem der Ansprüche 1 bis 6, **dadurch gekennzeichnet, dass** mindestens ein Aufnahmeabschnitt (11, 12) mindestens einen O-Ring (18) aufweist.

9. Vorrichtung nach einem der Ansprüche 1 bis 8, **dadurch gekennzeichnet, dass** das erste Aufnahmeelement (10) eine das zweite Aufnahmeelement (40) übergreifende Schürze (14) aufweist, in der die federnden Druckstücke (30) nach innen weisend angeordnet sind.

10. Vorrichtung nach einem der Ansprüche 1 bis 9, **dadurch gekennzeichnet, dass** das zweite Aufnahmeelement (40) am Außenumfang eine umlaufende Nut (42) aufweist.

11. Vorrichtung nach einem der Ansprüche 1 bis 10, **dadurch gekennzeichnet, dass** die federnden Druckstücke (30) außermittig in die Nut (42) eingreifen.

12. Vorrichtung nach einem der Ansprüche 1 bis 11, **dadurch gekennzeichnet, dass** die Schweißstation (300) einen Laser (330) aufweist.

13. Vorrichtung nach einem der Ansprüche 1 bis 12, **dadurch gekennzeichnet, dass** die Schweißstation (300) einen Tisch (320) mit einer Mulde (321) aufweist, in den die miteinander verbundenen Aufnahmeelemente (10, 40) einlegbar sind.

14. Vorrichtung nach einem der Ansprüche 12 oder 13, **dadurch gekennzeichnet, dass** die Achse (325) des Tisches (320) unter einem Winkel α zwischen 70° und 95° zum Strahl (332) des Lasers (330) geneigt angeordnet ist.

15. Vorrichtung nach einem der Ansprüche 12 bis 14, **dadurch gekennzeichnet, dass** der Laser (330) über dem Tisch (320) angeordnet ist.

16. Verwendung der Vorrichtung nach einem der Ansprüche 1 bis 15 zum Verschweißen von Gleitlagerbuchsen (6) mit Anlaufscheiben oder Anlaufringen (7).

17. Aufnahmeelement (10) mit einem Grundkörper (19) zur klemmenden Aufnahme eines Bauelementes (6), **gekennzeichnet durch** mindestens einen Aufnahmeabschnitt (11, 12), der senkrecht zur Oberfläche des aufzunehmenden Bauteils (6) federnd ausgebildet ist, und eine Vielzahl von ineinander greifenden, nebeneinander angeordneten Federelementen (21) aufweist.

18. Aufnahmeelement nach Anspruch 17, **dadurch gekennzeichnet, dass** jedes Federelement (21) zwei Schenkel (22, 24) aufweist, wovon das freie Ende (23) des ersten Schenkels (22) am Bauteil angreift und das Ende (25) des zweiten Schenkels (24) am Grundkörper (19) befestigt ist.

## Claims

1. Device for joining at least two components, **characterized by**
- a press-in station (100) comprising at least one first holding element (10) having locking means (13) and comprising a first pressing device (101) for pressing the first component (6) into the first holding element (10),
- a joining station (200) comprising a second holding element (40) having second locking means (44) for holding the second component (7) and comprising a second pressing device (201) for pressing together and locking the two holding elements (10, 40) and
- a welding station (300) for welding the two components (6, 7) present in the two holding elements (10, 40).

2. Device according to Claim 1, **characterized in that** the locking means (13, 44) comprise indentations on one holding element (10 or 40) and, on the other holding element (10 or 40), springy thrust pieces (30) engaging the indentations.

3. Device according to Claim 1 or 2, **characterized in that** the first holding element (10) is an annular radial bearing holder and the second holding element (40) is an annular axial bearing holder.

4. Device according to any of Claims 1 to 3, **characterized in that** the first holding element (10) has a large-diameter first holding section (11) and an adjacent small-diameter second holding section (12).

5. Device according to any of Claims 1 to 4, **characterized in that** the width B1 of the second holding section (12) is smaller than the width B2 of the first component (6).

6. Device according to any of Claims 1 to 5, **characterized in that** the holding sections (11, 12) are formed so as to be springy in the radial direction.

7. Device according to any of Claims 1 to 6, **characterized in that** the first holding element (10) has a clamping ring (20) which has a multiplicity of intermeasuring spring elements (21) arranged side by side.

8. Device according to any of Claims 1 to 6, **characterized in that** at least one holding section (11, 12) has at least one O-ring (18).

9. Device according to any of Claims 1 to 8, **characterized in that** the first holding element (10) has an apron (14) which grips over the second holding element (40) and in which the springy thrust pieces (30) are arranged so that they point inwards.

10. Device according to any of Claims 1 to 9, **characterized in that** the second holding element (40) has an all-round groove (42) on the outer circumference.

11. Device according to any of Claims 1 to 10, **characterized in that** the springy thrust pieces (30) engage the groove (42) eccentrically.

12. Device according to any of Claims 1 to 11, **characterized in that** the welding station (300) has a laser (330).

13. Device according to any of Claims 1 to 12, **characterized in that** the welding station (300) has a table (320) with a depression (321) into which the holding elements (10, 40) connected to one another can be inserted.

14. Device according to either of Claims 12 and 13, **characterized in that** the axis (325) of the table (320) is arranged inclined at an angle α between 70° and 95° to the beam (332) of the laser (330).

15. Device according to any of Claims 12 to 14, **characterized in that** the laser (330) is arranged above the table (320).

16. Use of the device according to any of Claims 1 to 15 for welding sliding bearing bushes (6) to thrust washers or thrust rings (7).

17. Holding element (10) having a base body (19) for clamping a structural element (6), **characterized by** at least one holding section (11, 12) which is formed so as to be springy perpendicular to the surface of the component (6) to be held and has a multiplicity of intermeshing spring elements (21) arranged side by side.

18. Holding element according to Claim 17, **characterized in that** each spring element (21) has two limbs (22, 24), the free end (23) of the first limb (22) engaging the component and the end (25) of the second limb (24) being fixed to the base body (19).

## Revendications

1. Dispositif pour assembler au moins deux composants, **caractérisé par**
- un poste d'insertion à force (100) avec au moins un premier élément de réception (10) présentant de premiers moyens d'encliquetage (13) et avec un premier équipement d'emboutissage (101) pour insérer à force le premier composant (6) dans le premier élément de réception (10),
- un poste d'assemblage (200) avec un deuxième élément de réception (40) présentant de deuxièmes moyens d'encliquetage (44) pour recevoir le deuxième composant (7) et avec un deuxième équipement d'emboutissage (201) pour comprimer et assembler par encliquetage les deux élément de réception (10, 40) et
- un poste de soudage (300) pour souder les deux composants (6, 7) se trouvant dans les deux éléments de réception (10, 40).

2. Dispositif selon la revendication 1, **caractérisé en ce que** les moyens d'encliquetage (13, 44) comprennent des renfoncements sur un élément de réception (10 ou 40) et des éléments de pression élastiques (30) s'engageant dans les renfoncements sur l'autre élément de réception (10 ou 40).

3. Dispositif selon la revendication 1 ou 2, **caractérisé en ce que** le premier élément de réception (10) est un logement de palier radial annulaire et le deuxième élément de réception (40) un logement de palier axial annulaire.

4. Dispositif selon l'une des revendications 1 à 3, **caractérisé en ce que** le premier élément de réception (10) présente une première portion de réception (11) de grand diamètre et une deuxième portion de réception (12) adjacente de petit diamètre.

5. Dispositif selon l'une des revendications 1 à 4, **caractérisé en ce que** la largeur B1 de la deuxième portion de réception (12) est plus petite que la largeur B2 du premier composant (6).

6. Dispositif selon l'une des revendications 1 à 5, **caractérisé en ce que** les portions de réception (11, 12) sont conçues élastiques en direction radiale.

7. Dispositif selon l'une des revendications 1 à 6, **caractérisé en ce que** le premier élément de réception (10) présente une bague de serrage (20) qui présente une pluralité d'éléments élastiques (21) s'engageant les uns dans les autres et disposés les uns à côté des autres.

8. Dispositif selon l'une des revendications 1 à 6, **caractérisé en ce qu'**au moins une portion de réception (11, 12) présente au moins un joint torique (18).

9. Dispositif selon l'une des revendications 1 à 8, **caractérisé en ce que** le premier élément de réception (10) présente une jupe (14) recouvrant le deuxième élément de réception (40), dans laquelle les éléments de pression élastiques (30) sont disposés en étant tournés vers l'intérieur.

10. Dispositif selon l'une des revendications 1 à 9, **caractérisé en ce que** le deuxième élément de réception (40) présente une rainure périphérique (42) sur le pourtour extérieur.

11. Dispositif selon l'une des revendications 1 à 10, **caractérisé en ce que** les éléments de pression élastiques (30) s'engagent excentriquement dans la rainure (42).

12. Dispositif selon l'une des revendications 1 à 11, **caractérisé en ce que** le poste de soudage (300) présente un laser (330).

13. Dispositif selon l'une des revendications 1 à 12, **caractérisé en ce que** le poste de soudage (300) présente une table (320) avec une cavité (321) dans laquelle les éléments de réception (10, 40) assemblés peuvent être insérés.

14. Dispositif selon l'une des revendications 12 ou 13, **caractérisé en ce que** l'axe (325) de la table (320) est incliné d'un angle α compris entre 70° et 95° par rapport au faisceau (332) du laser (330).

15. Dispositif selon l'une des revendications 12 à 14, **caractérisé en ce que** le laser (330) est disposé au-dessus de la table (320).

16. Utilisation du dispositif selon l'une des revendications 1 à 15 pour souder des coussinets lisses (6) avec des rondelles de butée ou des bagues de butée (7).

17. Elément de réception (10) avec un corps de base (19) pour la réception par serrage d'un composant (6), **caractérisé par** au moins une portion de réception (11, 12) qui est conçue élastique perpendiculairement à la surface du composant (6) à recevoir et qui présente une pluralité d'éléments élastiques (21) s'engageant les uns dans les autres et disposés les uns à côté des autres.

18. Elément de réception selon la revendication 17, **caractérisé en ce que** chaque élément élastique (21) présente deux branches (22, 24) dont l'extrémité libre (23) de la première branche (22) s'engage sur le composant et l'extrémité (25) de la deuxième branche (24) est fixée au corps de base (19).
